# EUROPÄISCHE PATENTSCHRIFT

(11) **EP 1 708 435 B1**
(45) Veröffentlichungstag und Bekanntmachung des Hinweises auf die Patenterteilung: **18.02.2009**
(21) Anmeldenummer: 06006447.4
(22) Anmeldetag: 28.03.2006
(51) Int. Cl.: H04L 12/56

(54) **Durchsetzung geeigneter Richtlinien für Datenverkehr in einem Funk-Kommunikationssystem**
Enforcing appropriate policies for data traffic in a radio communication system
Mettre en oeuvre des politiques appropriées pour trafic de données dans un système de communication radio

(30) Priorität: 30.03.2005 DE 102005014536
(43) Veröffentlichungstag der Anmeldung: 04.10.2006
(73) Patentinhaber: Vodafone Holding GmbH, 40213 Düsseldorf (DE)
(72) Erfinder: Purkop, Thomas, 50259 Pulheim (DE)
(74) Vertreter: Müller, Thomas

(56) Entgegenhaltungen:
- WO-A-01/78328
- WO-A-20/04100466
- US-A1- 2002 178 247
- 3RD GENERATION PARTNERSHIP PROJECT 3GPP: "3rd Generation Partnership Project; Technical Specification Group Services and System Aspects; Evolution of Policy Control and Charging (Release 7)" 3GPP TR 23.803 V0.3.0, 24. März 2005 (2005-03-24), Seite 1-13, XP002389323
- "Digital cellular telecommunications system (Phase 2+); Universal Mobile Telecommunications System (UMTS); Policy control over Go interface (3GPP TS 29.207 version 6.2.0 Release 6); ETSI TS 129 207" ETSI STANDARDS, EUROPEAN TELECOMMUNICATIONS STANDARDS INSTITUTE, SOPHIA-ANTIPO, FR, Bd. 3-CN3, Nr. V620, Dezember 2004 (2004-12), XP014027909 ISSN: 0000-0001
- "Digital cellular telecommunications system (Phase 2+); Universal Mobile Telecommunications System (UMTS); End to end Quality of Service (QoS) signalling flows (3GPP TS 29.208 version 5.9.0 Release 5); ETSI TS 129 208" ETSI STANDARDS, EUROPEAN TELECOMMUNICATIONS STANDARDS INSTITUTE, SOPHIA-ANTIPO, FR, Bd. 3-CN3, Nr. V590, Dezember 2004 (2004-12), XP014027911 ISSN: 0000-0001
- "Universal Mobile Telecommunications System (UMTS); Telecommunication management; Charging management; Packet Switched (PS) domain charging (3GPP TS 32.251 version 6.1.0 Release 6); ETSI TS 132 251" ETSI STANDARDS, EUROPEAN TELECOMMUNICATIONS STANDARDS INSTITUTE, SOPHIA-ANTIPO, FR, Bd. 3-SA5;3-CT5, Nr. V610, Dezember 2004 (2004-12), XP014028031 ISSN: 0000-0001

## Beschreibung

Die vorliegende Erfindung betrifft ein Verfahren und System zur Durchsetzung geeigneter Richtlinien für Datenverkehr in einem Funk-Kommunikationssystem.

Bei modernen Funk-Kommunikationssystemen kann ein mobiles Endgerät über ein Zugangsnetzwerk mit einem Kernnetzwerk verbunden werden. Hierbei kann das Zugangsnetz ein GPRS (General Packet Radio Service) oder ein UMTS-Netz sein. In dem Kernnetzwerk kann ein Dienstenetzwerk (z.B. ein IP-Mulitmedi-Subsystem (IMS)) integriert sein.

Auf den Datenverkehr in einem solchen Funk-Kommunikationsnetz sind unterschiedliche Richtlinien (policies) anzuwenden. Diese können beispielsweise die Vergebührung des Datenverkehrs oder die Dienstgüte (Qualitiy of Service (QoS)) betreffen. Diese Richtlinien sind in entsprechenden Funktionen des Kommunikationsnetzes hinterlegt. Diese Richtlinien können beispielsweise in einer Charging Rule Function (CRF) und/oder einer Policy Decision Function (PDF) oder in einer Kombination solcher Funktionen hinterlegt sein. Sowohl eine in dem IMS hinterlegte Anwendungs-Funktion, die beispielsweise eine Dienstesteuerfunktion, wie eine Call Session control function (CSCF) darstellen kann, als auch der für die Verbindung von dem Kernnetzwerk zu dessen IMS zuständige Netzübergangknoten (Gateway GPRS support node (GGSN)) müssen zur Ausführung der ihnen zugeteilten Aufgaben, auf die Richtlinienfunktionen zugreifen.

Die Auswahl der geeigneten Richtlinien erfolgt in der CRF/PDF. Bei Herstellung einer Kommunikationsverbindung in einem Kommunikationsnetz wird von einem mobilen Endgerät (User Equipment (UE)) eine Aktivierungsanfrage zur Aktivierung einer PDP-Verbindung (Packet Data Protocol context), die im Folgenden auch als PDP-Context bezeichnet wird, an den Eingangnetzknoten GGSN, der im Folgenden auch als Transport-Netzübergangs-Netzknoten bezeichnet wird, eine Aktivierungsanfrage für diesen Context gesandt. Hierbei wird zwischen primärem und sekundärem Context unterschieden. Der primäre Context dient im wesentlichen zum Signalsieren für die Herstellung der Kommunikationsverbindung und gegebenenfalls für eine Anwendung verwendet werden kann, wohingegen der sekundäre Context im wesentlichen für die Anwendungssitzungen dient und diesem eine hierauf angepasste Dienstgüte (Qualtiy of Service (QoS)) zugeteilt ist.

Wird eine Anfrage zur Herstellung einer Kommunikationsverbindung an dem Eingangsnetzknoten GGSN erhalten, so muss dieser die für den entsprechenden Context zutreffenden Richtlinien erfragen. Hierzu stellt der GGSN eine Verbindung mit einer Richtlinienfunktion (beispielsweise einer CRF/PDF) her. Diese Verbindung wird in der Regel über die Go/Gx-Schnittstelle unter Verwendung eines so genannten Diameter-Protokolls, das für die Kredit-Steuerungs-Anwendung (Credit Control Application (CCA)) dient, erzeugt. Über diese Schnittstelle empfängt der GGSN die auf einen bestimmten Context anzuwendenden Richtlinien.

Um die geeignete Richtlinie eruieren zu können, muss die Richtlinienfunktion Informationen über den Context empfangen. Diese Information umfasst insbesondere eine Anbindungsinformation, durch die eine Anbindung eines PDP-Contexts, der von einem mobilen Endgerät verwendet wird, und Sitzungen oder Ereignissen der Anwendungsebene erfolgt. Diese Anbindung wird in der Regel durch die Verwendung so genannter Autorisierungstokens durchgeführt, die mit den Anfragen zur Herstellung des Contexts versandt werden. In einigen Fällen kann die Verwendung von Tokens aber zu Problemen führen, wenn beispielsweise das mobile Endgerät eine Token-basierte Anbindung nicht unterstützt oder das Anwendungsprotokoll den Autorisierungs-Token nicht an das UE vermitteln kann.

In der 3Rd Generation Partnership Project 3GPP "Technical Specification Group Services and System Aspects; Evolution of policy Control and Charging (Release 7)" 3GPP TR 23.803 V0.3.3, 24. März 2005 (XP002389323) wird allgemein zur Anbindung von IP Trägern an Dienste die Verwendung einer Endgeräte ID (UE ID) gegebenenfalls zusammen mit TFT-Filterinformationen beschrieben. Auch in der WO 2004/100466 A1 wird ein Verfahren zur Autorisierung von Datentransfer beschrieben, bei dem eine Endgeräte ID (UE ID) beispielsweise zusammen mit einem Context-Zugangspunkt (cAP) als Parameter einer Autorisierungsanfrage zur Autorisierung eines ersten PDP Contexts verwendet wird.

Bei diesen Anbindungsmechanismen und auch bei Token-basierten Anbindungsmechanismen muss eine Unterscheidung zwischen primärem und sekundärem Context hinreichend ermöglicht werden.

Aufgabe der vorliegenden Erfindung ist es ein Verfahren und System zur Durchsetzung geeigneter Richtlinien zu schaffen, bei denen die Erkennungsmöglichkeit eines spezifischen Contexts und die Zuordnung einer Richtlinie erleichtert werden.

Die Aufgabe wird gelöst durch ein Verfahren mit den Merkmalen nach Anspruch 1 sowie durch ein System mit den Merkmalen nach Anspruch 15.

Vorteile und Merkmale, die in Bezug auf das Verfahren beschrieben werden gelten - soweit anwendbar - entsprechend für das erfindungsgemäße System und umgekehrt.

Die Erfindung betrifft ein Verfahren zur Durchsetzung geeigneter Richtlinien für von Datenverkehr in einem Funk-Kommunikationssystem, das zumindest ein mobiles Endgerät (UE) und zumindest ein Dienstenetz (IMS) mit zumindest einem Eingangsnetzknoten (GGSN) und zumindest einer Richtlinieneinheit (CRF/PDF), in der Richtlinieninformationen hinterlegt sind, umfasst. Das Verfahren zeichnet sich dadurch aus, dass eine Weiterleitung von Richtlinieninformationen betreffend eine Verbindung (primärer PDP Context) an den Eingangsnetzknoten (GGSN) für eine vorgegebene Zeit ausgesetzt wird.

Durch eine Verzögerung der Weiterleitung der Richtlinieninformationen kann verhindert werden, dass eine Weiterleitung von Richtlinien-Informationen betreffend einen primären Contextes erfolgt, nachdem bereits eine Anfrage zur Herstellung eines sekundären Contextes empfangen wurde. In diesem Fall würde der Eingangsnetzknoten gegebenenfalls eine Richtlinie auf einen primären Context anwenden, der dem sekundären Context zuzurechnen wäre. Dieses Problem tritt insbesondere aus dem Grund auf, dass die Kommunikation zwischen dem Eingangsnetzknoten GGSN und der Richtlinienfunktion bezüglich des primären Contexts auf einem Push-Konzept beruht, was bedeutet, dass die Richtlinienfunktion bei Empfang der Information über eine erfolgreiche Herstellung einer Verbindung mit eine Anwendungsfunktion, beispielsweise der P-CSCF im Falle eines IMS, automatisch die Informationen über die Go/Gx-Schnittstelle an die GGSN leitet, während der Eingangsnetzknoten GGSN bei der Aktivierung eines sekundären Contexts eine Pull-Anfrage an die Richtlinieneinheit sendet. Dies bedeutet, dass der Eingangsnetzknoten auf den Empfang einer Richtlinieninformation wartet.

Daher wird die Weiterleitung von Richtlinieninformationen vorzugsweise zu dem Zeitpunkt ausgesetzt, zu dem die Richtlinieneinheit (CRF/PDF) die Nachricht über die erfolgreiche Herstellung einer Anwendungssitzung mit einem mobilen Endgerät (UE) von einem Anwendungselement (AF) empfangen hat.

Zumindest ab diesem Zeitpunkt besteht die Möglichkeit, dass der Eingangsnetzknoten GGSN eine Pull-Anfrage sendet, die dem auf den primären Context aufgesetzen sekundären Context zuzuordnen ist. Bei Verwendung eines 3GPP-Standard Strom für IMS-Sitzungsherstellung durch das mobile Endgerät, kann allerdings die Aktivierung des sekundären PDP-Contexts vor dem Erhalt der Nachricht über die erfolgreiche Herstellung einer Verbindung zu einer Anwendungsfunktion (AF) an der Richtlinienfunktion empfangen werden. Für diesen Fall kann ein Überprüfungsschritt vorgesehen sein, in dem vor der Aussetzung der Weiterleitung überprüft wird, ob bereits Richtlinien betreffend den sekundären Context weitergeleitet wurden.

Die für die Aussetzung der Weiterleitung vorgegebene Zeit kann Null betragen und die Richtlinieninformationen unmittelbar durchgesetzt werden und beim Empfang von Angaben zur Verteilung des Datenverkehrs (TFT) entfernt werden und auf eine andere Verbindung (PDP Context) angewendet werden.

Die Richtlinieneinheit (CRF/PDF) speichert vorzugsweise Richtlinieninformationen, die von der Richtlinieneinheit (CRF/PDF) an den Transport-Netzübergang-Netzknoten (GGSN) weitergeleitet wurden. Auf diese Weise können spätere Aktionen in Abhängigkeit der bereits weitergeleiteten Richtlinieninformationen erfolgen.

Gemäß einer Ausführungsform wird beim Erhalt einer Anfrage zur Herstellung einer auf eine bereits bestehende Verbindung (primärer PDP Context) aufgesetzte weitere Verbindung (sekundärer PDP Context) vor dem Ablauf der vorgegebenen Zeit, das Aussetzen der Weiterleitung der Richtlinieninformationen an den Transport-Netzübergang-Netzknoten (GGSN) gestoppt und die angeforderten Richtlinieninformationen werden gesendet. Dies kann auch für den Fall zutreffen, dass eine Anfrage zur Änderung eines bestehenden Contexts empfangen wird.

Beim Erhalt einer Anfrage zur Herstellung einer zusätzlichen Verbindung (sekundärer PDP Context) nach der Weiterleitung von Richtlinieninformationen betreffend eine erste Verbindung (primärer PDP Context) wird die weitergeleitete Richtlinieninformation entfernt wird und auf die zusätzliche Verbindung (secondary PDP context) angewendet.

Die angeforderten Richtlinieninformationen werden vorzugsweise durch einen TFT-Uplink/Downlink-Filter ermittelt.

Die Richtlinieninformationen können beispielsweise Richtlinien betreffend die Vergebührung des Datenverkehrs und/oder betreffend die Dienstgüte darstellen.

Gemäß einer Ausführungsform zeichnet sich das erfindungsgemäße Verfahren dadurch aus, dass bei der Festlegung der anzuwendenden Richtlinieninformationen für eine Verbindung (PDP Context) mit einem mobilen Endgerät (UE) zumindest ein Teil von Nutzerdaten (IP-Adresse) betreffend das mobile Endgerät (UE) als Anbindungsparameter zwischen einer Verbindung (PDP Context), die von dem mobilen Endgerät (UE) genutzt wird, und einer Sitzungen oder Ereignissen auf der Anwendungsebene verwendet wird.

Dieses Verfahren weist den Vorteil auf, dass die Nutzerdaten bei der Aktivierung eines PDP-Contexts bekannt sind und im Gegensatz zu Token in jedem Fall auf dem Endgerät vorliegen auch bei unterschiedlichen Übertragungsprotokollen von dem Endgerät übertragen werden können. Zudem liegen diese Angaben sowohl bei primärem als auch bei sekundärem Context vor.

Bei der Herstellung beziehungsweise Aktivierung einer weiteren auf eine bestehende Verbindung (primärer PDP Context) aufgesetzten Verbindung (sekundärer PDP Context) mit dem mobilen Endgerät (UE) können Angaben zu der Verteilung von Uplink- und/oder Downlink-Verkehr auf mehrere bestehende Verbindungen (TFT) als zusätzlicher Anbindungsparameter verwendet werden.

Auch diese Angaben werden von dem mobilen Endgerät zur Verfügung gestellt und können daher ideal als Anbindungsparameter dienen.

In Abhängigkeit einer Filter-Information betreffend die Angaben zur Verteilung (TFT), kann eine geeignete Richtlinieninformation für mindestens eine Anwendungssitzung in einer Verbindung (PDP Context) hinzugefügt oder entfernt werden.

Hierdurch wird es möglich nicht gültige Anbindungen zu identifizieren und die der entsprechenden Anwendungssitzung zugeordnete Richtlinie zu entfernen.

Die Anweisung zur Hinzufügung oder Entfernung der Richtlinieninformation von der Richtlinieneinheit (CRF/PDF) kann mit einer Antwortnachricht auf eine Pull-Anfrage (CCR) des Transport-Netzübergang-Netzknotens (GGSN) an diesen übermittelt werden.

Der Eingangsnetzknoten, insbesondere der Transport-Netzübergang-Netzknoten (GGSN) kann beim Empfang einer Verbindungsanfrage für eine auf eine bestehende Verbindung (primärer PDP Context) aufgesetzte Verbindung (sekundärer PDP Context) zumindest die von dem mobilen Endgerät (UE) übermittelten Angaben über die Verteilung (TFT) speichern.

Hierdurch wird die Anbindung an die entsprechenden Contexte gewährleistet.

Die Nutzerdaten (IP-Adresse) und Angaben zur Verteilung (TFT) können bei einer Pull-Anfrage des Transport-Netzübergang-Netzknotens (GGSN) an die Richtlinieneinheit (CRF/PDF) in der Richtlinieneinheit (CRF/PDF) als Identifikationsschlüssel-Angabe für die Richtlinieninformation, die für die Verbindung (PDP Context) durchgesetzt werden soll, verwendet werden.

Gemäß einem weiteren Aspekt betrifft die Erfindung ein System zur Durchsetzung geeigneter Richtlinien für Datenverkehr in einem Funk-Kommunikationssystem, das zumindest ein mobiles Endgerät (UE) und zumindest ein Dienstenetz (IMS) mit zumindest einem Transport-Netzübergang-Netzknoten (GGSN) und zumindest einer Richtlinieneinheit (CRF/PDF)in der Richtlinieninformationen hinterlegt sind, umfasst. Das System zeichnet sich dadurch aus, dass in der Richtlinieneinheit ein Zeitschalter enthalten ist, der eine Weiterleitung von Richtlinieninformationen an den Transport-Netzübergang-Netzknoten (GGSN) für eine vorgegebene Zeit unterbrechen kann.

Erfingdungsgemäß kann in der Richtlinieneinheit (CRF/PDF) eine Filtereinheit vorgesehen sein, die einen Eingang für Nutzerdaten und einen Eingang für Angaben zur Verteilung (TFT) von Uplink- und/oder Downlink-Verkehr auf bestehende Verbindungen (PDP Context) aufweist, und die über diese Eingänge erhaltenen Angaben können als Filterkriterium verwendet werden.

Der Eingangsnetzknoten, insbesondere der Transport-Netzübergang-Netzknoten (GGSN) ist vorzugsweise mit mindestens einer Richtlinieneinheit (CRF/PDF) zur Übermittlung von Angaben zur Verteilung (TFT) von Uplink- und/oder Downlink-Verkehr auf bestehende Verbindungen (PDP Context) in Zusammenhang mit Nutzerdaten (IP) betreffend das mobile Endgerät (UE) verbunden.

Die erfindungsgemäßen Systeme sind zur Durchführung mindestens eines der erfindungsgemäßen Verfahren ausgelegt.

Die Erfindung wird im Folgenden erneut in Detail erläutert.

Die Erfindung kann verwendet werden in GGSN und CRF/PDF Implementationen, um eine Token-freie Bindung für primären und sekundären Context handhaben zu können.

In einer 3GPP Umgebung, in der die CRF/PDF für Zwecke der Vergebührung in Abhängigkeit der übermittelten Datenmenge (Flow bearer charging) und in Abhängigkeit der dienstbasierten lokalen Richtlinie implementiert sind, kann es vorkommen, dass der GGSN und CRF/PDF eine Token-freie Bindung verwenden müssen, wenn beispielsweise das Terminal eine Token-basierte (Autorisierungs-Token) Bindung nicht unterstützt oder das Anwendungsprotokoll den Autorisierungs-Token nicht an das UE vermitteln kann.

Mit der Erfindung wird eine Definition über den Token-freien Bindungsmechanismus in GGSN und CRF/PDF geliefert.

Die Schnittstelle, die verwendet wird, ist eine kombinierte Go/Gx, die auf dem Diameter Base Protokoll basiert und die Gx-Anwendung ist eine Anwendung, wie in TS 39.210 definiert ist.

Im Folgenden wird die Behandlung von PDP-Context in der CRF/PDF beschrieben.

Zunächst wird die Behandlung von primärem PDP-Context (primary PDP-context) in der CRF/PDF beschrieben.

Bei der Aktivierung eines primären PDP-Contexts wird eine Diameter Go/Gx-Sitzung gestartet und von der CRF/PDF das Push-Model für das Senden von Richtlinien Informationen verwendet.

Im Falle eines primären PDP-Contexts wird ausschließlich die UE-IP-Adresse an der CRF/PDF als ein Anbindungsparameter verwendet, um die Kontrolle auf neue oder existierende Richtlinien-Sitzungsentscheidungen für einen bestimmten Nutzer auszuführen. Da einer UE-IP-Adresse mehr als eine Richtlinieninformation, in Abhängigkeit der Anzahl von gleichzeitigen aktiven Anwendungssitzungen für diese UE-IP-Adresse an der CRF/PDF zugeordnet sein kann, verfolgt die CRF/PDF die bereits für den PDP-Context durchgesetzten Richtlinieninformationen und sendet an den GGSN alle Richtlinieninformationen oder Änderungen, die noch nicht durchgesetzt sind. Alternativ kann bei jeder neuen Anwendungssitzung oder Änderung einer bereits bestehenden Anwendungssitzung die CRF/PDF alle aktiven Richtlinieninformationen für alle andauernden Anwendungssitzungen an den GGSN senden.

Die CRF/PDF verifiziert bei der Credit Control Request-Anfangsnachricht, die diese über die Go/Gx-Schnittstelle empfangen hat, ob sich die Anfrage auf einen primären oder einen sekundären PDP-Context bezieht, um bereits geschobene Informationen eines primären PDP-Contexts für den Fall zu überwachen, dass die Aktivierung eines sekundären PDP-Contexts auftritt. Diese Möglichkeit wird durch die Context-Typ-AVP, die von der GGSN in der Go/Gx-Nachricht gesendet wird, (z.B. CCR initial message) ermöglicht.

Wenn sekundäre PDP-Contexts unterstützt werden, kann es vorkommen, dass das UE einen sekundären PDP-Context aktiviert, um den IP-Flow, der mit einer gegebenen Anwendungssitzung verbunden ist, zu transportieren, während die CRF/PDF die Richtlinieninformationen zu dem primären PDP-Context bei erfolgreicher Herstellung einer Anwendungssitzung (z.B. SIP Sitzung) sendet. Diesem Wettlaufzustand kann wie folgt Rechnung getragen werden.

Wenn die CRF/PDF von der AF (z.B. P-CSCF) über eine erfolgreiche Herstellung einer Anwendungssitzung informiert wird (z.B. INVITE - 200 OK session setup nach RFC 3261), kann das anfängliche Weiterleiten neuer Richtlinieninformationen an das GGSN nur nach dem Ablauf eines speziellen Wettlauf-Überwachungs-Timers ausgeführt werden, der in der CRF/PDF nach der AF-Anzeige (z.B. 200 OK of the INVITE) gestartet wird. Die Dauer des Timers sollte lang genug sein, um den Empfang einer Aktivierung eines sekundären PDP-Contexts oder einer Aktualisierungsnachricht an dem GGSN zu erlauben, so dass eine Pull-Anfrage von dem GGSN empfangen werden kann. Andererseits soll die Dauer des Timers kurz genug gesetzt werden, um das Nutzergefühl nicht zu beeinträchtigen. (z.B. 2 bis 3 Sekunden). Dieser Timer soll die Wahrscheinlichkeit von Wettlauf-Zuständen zwischen Richtlinieninformations-Push und einer Aktivierung eines sekundären PDP-Contexts minimieren.

Wenn nach dem Timer-Ablauf und dem darauf folgenden Push von Richtlinien an den GGSN, die CRF/PDF eine Anfrage von dem GGSN für die Aktivierung eines sekundären PDP-Contexts oder eine Änderung empfängt, muss die CRF/PDF auch jegliche weitergeleitete Richtlinieninformation, die den primären PDP-Context betrifft berücksichtigen. Die CRF/PDF sollte in der Lage sein dieselben Richtlinieninformationen für den angefragten/geänderten sekundären PDP-Context erneut zu senden und die Richtlinien/Filterentscheidung, die zu dem primären PDP-Context fälschlicherweise gesandt wurde zu entfernen. Eine solche Richtlinieninformation wird auf der Basis des empfangenen TFT (Traffic Flow Template) oder bei einer token-basierenden Anbindung durch den empfangenen Autorisierungstoken aufgefunden. Um herauszufinden, welche Richtlinieninformationen auf einen bestimmten sekundären PDP-Context angewendet werden sollen, verwendet die CRF/PDF entweder die UE-IP-Adresse und das TFT oder den empfangenen Autorisierungstoken und Datenstrom-Kennung. Bei Verwendung eines standard-SIP-Flows zur IMS-Sitzungsherstellung von dem mobilen Endgerät UE, wird die Aktivierung des sekundären PDP-Contexts empfangen, bevor das 200 OK Signal des INVITE von dem AF empfangen wird. In diesem Fall wird ein Überprüfen von bereits weitergeleiteten Richtlinieninformationen hinfällig.

Im Folgenden wird die Behandlung von sekundärem PDP-Context (secondary PDP-context), insbesondere dessen Aktivierung und/oder Änderung in der CRF/PDF beschrieben.

Das UE kann jedes Mal, wenn eine neue Anwendungssitzung (z.B. IMS/SIP-Sitzung) hergestellt wird, einen sekundären PDP-Context aktivieren oder ändern. Das UE wird hierbei in dem TFT ausreichende Informationen einschließen, um die Medienströme, die in dem sekundären PDP-Context getragen werden sollen, identifizieren zu können. Im einfachen Fall kann dies die Angabe des Ziel-Ports sein, der in dem SDP angeboten wird, an den der andere Endpunkt Anwendungsdaten (z.B. Medienströme) senden wird. Das TFT wird in der Aktivierungsnachricht des sekundären PDP-Context oder in PDP-Context-Aktualisierungsnachrichten, die beispielsweise in 3GPP TS 23.060, TS 24.008 und TS 29.060 definiert sind, übermittelt.

Es werden zwei neue Werte für das Ereignis-Trigger-AVP, das in TS 29.210 beschrieben ist, definiert und dieses AVP wird in die Richtlinien-Anfrage-Nachricht (z.B. CCR update message) einbezogen, um das aufgetretene Ereignis anzuzeigen.

Die neuen Werte sind:
PDP_CONTENT_UPDATE
und
TFT_DELETE.

Wobei PDP_CONTENT_UPDATE der Wert ist, der von dem GGSN in CCR Befehlen verwendet wird, um anzuzeigen, dass sich die Go/Gx Anfrage auf eine PDP-Context-Aktualisierungsanfrage bezieht, bei der der angeforderte QoS den zuvor durch die E-PDF autorisierten QoS überschreitet und TFT oder Anbindungsinformationen sich nicht geändert haben.

Der TFT_DELETE Wert wird in CCR Befehlen verwendet um anzuzeigen, dass sich die Go/Gx Anfrage auf eine PDP-Context-Aktualisierungsanfrage bezieht, bei der das UE die TFT-Informationen, die dem PDP-Context zugeordnet waren, gelöscht hat.

Wenn eine Aktivierungsanfrage für einen sekundären PDP-Context (identifiziert durch die Go/Gx CCR Initial-Anfragenachricht, bei der der Context-Typ AVP auf SECONDARY gesetzt ist) oder eine Änderungsanfrage für einen sekundären PDP-Context (identifiziert durch die Go/Gx CCR Änderungs-Anfragenachricht, bei der der Event-Trigger-AVP auf TFT_CHANGE oder TFT_DELETE oder PDP_CONTEXT_UPDATE gesetzt ist) vor dem Ablauf des Wettlauf-Überwachungs-Timer empfangen wird, wird der Timer gestoppt und die Richtlinieninformation wird als Antwort auf die Pull-Anfrage an den GGSN gesandt. Die CRF/PDF wird alle aktiven Sitzungen für diese UE IP-Adresse/TFT-Kombination überprüfen und eine Richtlinienentscheidung an das GGSN senden.

Wenn die Aktivierungsanfrage für einen sekundären PDP-Context (identifiziert durch die Go/Gx CCR Initial-Anfragenachricht, bei der der Context-Typ AVP auf SECONDARY gesetzt ist) oder eine Änderungsanfrage für einen sekundären PDP-Context (identifiziert durch die Go/Gx CCR Änderungs-Anfragenachricht, bei der der Event-Trigger-AVP auf TFT_CHANGE oder TFT_DELETE oder PDP_CONTEXT_UPDATE gesetzt ist) eintrifft, nachdem die Information betreffend den primären PDP-Context weitergeleitet wurde, wird die empfangene Anbindungsinformation (UE IP Adresse und TFT oder Autorisierungstoken und Strom-Kennung) verwendet, um die Richtlinienentscheidung, die bereits gesandt wurde, zu identifizieren und auf den sekundären PDP-Context anzuwenden.

Im Folgenden wird das Anwendungssitzungs-Multiplexing in sekundärem PDP-Context beschrieben.

In diesem Fall wird die Kombination des UE IP-Adresse und des TFT als Anbindung verwendet.

Wenn eine Änderungsanfrage für einen sekundären PDP-Context (identifiziert durch die Go/Gx CCR Aktualisierungs-Anfragenachricht, bei der der Event-Trigger-AVP auf TFT_CHANGE gesetzt ist) empfangen wird und einen neuen TFT enthält, kann dies daher resultieren, dass eine neue Anwendungssitzung zu einem PDP-Context hinzugefügt wurde oder eine bestehende Anwendungssitzung (z.B. IMS/SIP Sitzung) aus einem PDP-Context entfernt wurde. Die CRF/PDF findet alle korrespondierenden aktiven Sitzungen durch die empfangene UE IP-Adresse und Paketfilter des TFT und sendet die relevante Richtlinieninformation (z.B. Vergebührungsregel) an den GGSN. Dies kann gegebenenfalls in mehreren Instances der Charging-Rule-Defintion AVP in einem Charging Rule-Install AVP in der CCA-Update-Nachricht erfolgen. Wenn sich eine Regel nicht geändert hat, umfasst die Charging-Rule-Definition AVP lediglich den Charging-Rule-Namen. Wenn eine der identifizierten Anwendungssitzungen (oder im Falle von IMS-Sitzungen, eines der Medien) fallengelassen wurde, entfernt der E-PDF die entsprechende Vergebührungsregel, indem der Charging-Rule-Name AVP (oder mehrere Instanzen (instances) davon) in einen Charging-Rule-Remove AVP der CCA-Aktulaisierungsnachricht einbezogen wird.

Wenn die CRF/PDF ein CCR-Update für den sekundären PDP-Context empfängt, bei dem der Event-Trigger AVP auf TFT_DELETE gesetzt ist, aktualisiert diese zusätzlich zu den oben angegebenen Aktionen die Context-Typ-Zustandsvariable, die der Go/Gx Diameter-Sitzung (identifiziert durch die Diamter-Sitzungs-ID) zugeordnet ist, auf PRIMARY (um einen primären PDP-Context anzuzeigen) und beginnt die primäre PDP-Context-Operationen. Die CRF/PDF setzt die autorisierte Dienstgüte (QoS), sofern anwendbar, für den primären PDP-Context durch (z.B. interaktiv oder Hintergrund).

Wenn alle Anwendungssitzungen (z.B. IMS/SIP Sitzungen), die durch die empfangenen TFT-Informationen identifiziert sind, für den PDP-Context in der CRF/PDF nicht aktiv sind, entzieht die CRF/PDF die Autorisierung für den PDP-Context entsprechend der Betreiber-Richtlinie (d.h. kann PDP-context release anwenden), wenn der Event-Trigger AVP in dem CCR update nicht auf TFT_DELETE gesetzt war.

Wenn die empfangene TFT-Information nicht gültig ist, was bedeutet, dass eine korrespondierende Anwendungssitzung oder Anwendungssitzungen in der CRF/PDF nicht gefunden wurden, entfernt die CRF/PDF das ungültige TFT an den GGSN. Da Sitzungen in dem PDP-Context multiplext werden, muss die Diameter-Sitzung, die dem PDP-Context zugeordnet ist, aufrecht erhalten werden, so dass eine Fehlermeldung (error cause) nicht verwendet werden kann, da dies zu einem Abbruch der Diameter-Sitzung führen würde.

Eine Lösung, ist es eine ungültige Anbindung in einer Charging-Rule-Remove AVP durch die TFT-Paket-Filter-Information AVP in einer CCA-Nachricht anzuzeigen. Es ist zu beachten, dass dieser Mechanismus auch für Token-basierte Anbindungen (d.h. Autorisierungstoken und Strom-Kennung) gültig ist, aber die ungültige Anbindung wird durch einen neues AVP, das Anbindungs-Informations Attribute-Value-Pair (Binding-Information-AVP), angezeigt. Die Erfindung fügt dann die folgenden AVPs zu dem Charging-Rule-remove AVP wie folgt hinzu:
Charging-Rule-Remove::= < AVP Header: 1002 >
   *[ Charging-Rule-Name ]
   *[ Charging-Rule-Base-Name ]
   *[ Binding-Information ]
   *[ TFT-Packet-Filter-Information ]
   *[ AVP ]

Das Anbindungs-Information AVP ist definiert als:
Binding-Information : : = < AVP-Header: TBD >
   {Authorization-Token}
   *[ Flows ]

Die Autorisierungs-Token und Ströme (Flows) sind in dem 3GGPP TS 29.209 Standard definiert.

Auf diese Weise kann die der PDP-Verbindung (PDP-Context) zugeordnete Diameter-Sitzung aktiv gehalten werden und die Steuerungs-Verbindung mit der CRF/PDF bleibt aufrechterhalten.

Alternativ kann ein neues AVP wie folgt definiert werden:
Invalid-Binding ::= < AVP Header: TBD >
   *[ Binding-Information ]
   *[ TFT-Packet-Filter-Information ]
   *[ AVP ]

Im Folgenden wird die Behandlung durch den GGSN beschrieben:

Zunächst wird die Behandlung des verwendeten primären PDP-Context beschrieben.

Während der Aktivierung des Primären PDP-Context mit der ausgewählten CRF/PDF wird eine Go/Gx Diameter-Sitzung hergestellt. Während der Herstellung dieser Sitzung wird der Typ des PDP-Contexts (primär oder sekundär) der E-PDF durch das Context-Type AVP angezeigt.

Da Anwendungssitzungs-Datenverkehr, wie beispielsweise IMS-Sitzungs-Medien, auf derselben PDP-Verbindung gemultiplext wird und die PDP-Verbindung-Änderungsanfrage in der Regel von dem UE nicht verwendet wird, um Anwendungssitzungen (oder im Fall des IMS Medien) der PDP-Verbindung hinzuzufügen oder von dieser zu entfernen, muss der GGSN für die Weiterleitung von Richtlinieninformationen durch die CRF/PDF bereit sein. Der GGSN muss alle Pakete aus der PDP-Verbindung filtern und fallen lassen, die keinen vorbestimmten Filtern (d.h. regelbasiert) für die APN entsprechen.

Wenn eine neue oder aktualisierte Richtlinienanfrage über die Go/Gx-Schnittstelle von der CRF/PDF empfangen wird, muss die Richtlinie durchgesetzt werden und alle neu eintreffenden Pakete müssen zusätzlich zu der statisch vorgesehenen Regel-Basis entsprechend der dynamisch empfangenen Regeln gefiltert werden. Pakete, die weder dem statischen noch dem dynamischen Filter entsprechen, werden fallen gelassen.

Im Folgenden wird die Aktivierung und /oder Änderung einer sekundären PDP-Verbindung beschrieben.

Wenn die Aktivierung einer sekundären PDP-Verbindung empfangen wird, die gegebenenfalls ein Token enthalten kann, initiiert der GGSN eine neue Go/Gx-Diameter-Sitzung mit der ausgewählten CRF/PDF.

Wenn ein Autorisierungs-Token bei der Aktivierung der sekundären PDP-Verbindung empfangen wird, wird dieses in die Anfrage einbezogen. Wenn kein Token enthalten ist, wird der GGSN in jede erzeugte CCR die IP-Adresse des UE und das TFT als Anbindungsinformation einbeziehen, nach jeder Aktivierung oder Modifizierung einer sekundären PDP-Verbindung. Der GGSN wird den von dem UE für den sekundären PDP-Context empfangenen TFT speichern. Dies wird für Token-freie-Anbindungs-Behandlungs-Zwecke verwendet.

Der GGSN sendet eine Go/Gx-Anfrage an die CRF/PDF für eine PDP-Verbindungs-Änderung, wenn entweder der angefragte QoS den autorisierten/zugelassenen QoS überschreitet oder wenn TFT-Änderungen auftreten.

Im Folgenden wird das Anwendungs-Sitzungs-Multiplexen in sekundären PDP-Verbindungen beschrieben.

Wenn eine PDP-Aktualisierungs-Anfrage empfangen wird, die das TFT ändert, sendet der IPC/GGSN eine CCR-Aktualisierungs-Nachricht an die E-PDF, bei der das Event-Trigger-AVP auf TFT_CHANGE gesetzt ist (dieser Wert ist in dem 3GPP Standard TS 29.210 definiert) und die bestehenden gespeicherten TFT mit möglichen Änderungen beinhaltet ist. Der GGSN ersetzt den bestehenden TFT erst dann, wenn von der CRF/PDF eine erfolgreiche CCA-Aktualisierungsnachricht mit den dynamischen Regeln empfangen wurde. Das UE kann verschiedene TFT-Operationen ausführen:
- wenn die TFT-Operation "Create new TFT" lautet, wird der GGSN alle empfangenen TFT-Filter-Informationen, gegebenenfalls in mehreren Instanzen (Instances) des TFT-Packet-Filter-Information AVP, an die CRF/PDF senden
- wenn die TFT-Operation "Add packet filters to existing TFT" lautet, wird der GGSN alle zugefügten UE-Informationen zusätzlich zu der bestehenden gespeicherten TFT-Information an die CRF/PDF senden
- wenn die TFT-Operation "Delete existing TFT" lautet, wird der GGSN die gespeicherten TFT-Informationen an die CRF/PDF senden. Das Event-Trigger AVP wird statt dessen auf TFT_DELETE gesetzt
- wenn die TFT-Operation "Replace filters in existing TFT" lautet, wird der GGSN die gespeicherten TFT-Informationen entsprechend der Anfrage des UE angemessen modifiziert an die CRF/PDF senden
- wenn die TFT-Operation "Delete packet filters from existing TFT" lautet, wird der GGSN die gespeicherten TFT-Information an die CRF/PDF senden
- wenn die TFT-Operation "No TFT operation" lautet, wird der GGSN keine Anfrage an die CRF/PDF senden, es sei denn, dass die angefragte Dienstgüte QoS die zuvor autorisierte QoS überschreitet oder eine neue Token-basierte Anbindung empfangen wurde.

Wenn der GGSN die dynamische Vergebührungs-Regel von der CRF/PDF in einer erfolgreichen CCA-Aktualisierungs-Nachricht erhält, ersetzt dieses das alte TFT und akzeptiert die PDP-Verbindungs-Änderung. Alle möglichen Regeln, die in dem Charging-Rule-Install AVP empfangen wurden, werden installiert. Wenn ein Charging-Rule-Install AVP empfangen wird, wird die durch das Charging-Rule-Name AVP identifizierte Vergebührungsregel entfernt.

Wird eine CCA-Nachricht mit einem Charging-Rule-Remove AVP (oder mehrere Instanzen desselben), das die ungültige TFT-Information in dem TFT-Packet-Filter-Information AVP anzeigt, von der CRF/PDF empfangen, bleibt die alte TFT unverändert und die PDP-Verbindungsänderung wird zurückgewiesen. Es ist zu beachten, dass die PDP-Verbindung aktiv bleibt.

## Patentansprüche

1. Verfahren zur Durchsetzung geeigneter Richtlinien für Datenverkehr in einem Funk-Kommunikationssystem, das zumindest ein mobiles Endgerät (UE) und zumindest ein Dienstenetz (IMS) mit zumindest einem Eingangsnetzknoten (GGSN) und zumindest einer Richtlinieneinheit (CRF/PDF), in der Richtlinieninformationen hinterlegt sind, umfasst, **dadurch gekennzeichnet, dass** eine Weiterleitung von Richtlinieninformationen betreffend eine Verbindung (primärer PDP Context) an den Eingangsnetzknoten (GGSN) für eine vorgegebene Zeit ausgesetzt wird.

2. Verfahren nach Anspruch 1, **dadurch gekennzeichnet, dass** die Weiterleitung von Richtlinieninformationen zu dem Zeitpunkt ausgesetzt wird, zu dem die Richtlinieneinheit (CRF/PDF) eine Nachricht über die erfolgreiche Herstellung einer Anwendungssitzung mit einem mobilen Endgerät (UE) von einem Anwendungselement (AF) empfangen hat.

3. Verfahren nach Anspruch 1 oder 2, **dadurch gekennzeichnet, dass** die vorgegebene Zeit Null beträgt und die Richtlinieninformationen unmittelbar durchgesetzt werden und beim Empfang von Angaben zur Verteilung des Datenverkehrs (TFT) entfernt werden und auf eine andere Verbindung (PDP Context) angewendet werden.

4. Verfahren nach einem der Ansprüche 1 bis 3, **dadurch gekennzeichnet, dass** die Richtlinieneinheit (CRF/PDF) Richtlinieninformationen, die von der Richtlinieneinheit (CRF/PDF) an den Eingangsnetzknoten (GGSN) weitergeleitet wurden, speichert.

5. Verfahren nach einem der Ansprüche 1 bis 4, **dadurch gekennzeichnet, dass** beim Erhalt einer Anfrage zur Herstellung einer auf eine bereits bestehende Verbindung (primärer PDP Context) aufgesetzte weitere Verbindung (sekundärer PDP Context) vor dem Ablauf der vorgegebenen Zeit, das Aussetzen der Weiterleitung der Richtlinieninformationen an den Eingangsnetzknoten (GGSN) gestoppt wird und die angeforderten Richtlinieninformationen gesendet werden.

6. Verfahren nach einem der Ansprüche 1 bis 5, **dadurch gekennzeichnet, dass** beim Erhalt einer Anfrage zur Herstellung einer zusätzlichen Verbindung (sekundärer PDP Context) nach der Weiterleitung von Richtlinieninformationen betreffend eine erste Verbindung (primärer PDP Context) die weitergeleitete Richtlinieninformation entfernt wird und auf die zusätzliche Verbindung (sekundärer PDP context) angewendet wird.

7. Verfahren nach einem der Ansprüche 5 oder 6, **dadurch gekennzeichnet, dass** angeforderte Richtlinieninformationen durch einen TFT-Uplink/Downlink-Filter ermittelt werden.

8. Verfahren nach einem der Ansprüche 1 bis 7, **dadurch gekennzeichnet, dass** bei der Festlegung der anzuwendenden Richtlinieninformationen für eine Verbindung (PDP Context) mit einem mobilen Endgerät (UE) zumindest ein Teil von Nutzerdaten (IP) betreffend das mobile Endgerät (UE) als Anbindungsparameter zwischen einer Verbindung (PDP Context), die von dem mobilen Endgerät (UE) genutzt wird, und Sitzungen oder Ereignissen auf der Anwendungsebene verwendet wird.

9. Verfahren nach Anspruch 8, **dadurch gekennzeichnet, dass** bei Herstellung einer weiteren auf eine bestehende Verbindung (primärer PDP Context) aufgesetzte Verbindung (sekundärer PDP Context) mit dem mobilen Endgerät (UE) Angaben zu der Verteilung von Uplink- und/oder Downlink-Verkehr auf mehrere bestehende Verbindungen (TFT) als zusätzlicher Anbindungsparameter verwendet wird.

10. verfahren nach Anspruch 9, **dadurch gekennzeichnet, dass** in Abhängigkeit einer Filter-Information betreffend die Angaben zur Verteilung (TFT) eine geeignete Richtlinieninformation für mindestens eine Anwendungssitzung in einer Verbindung (PDP Context) hinzugefügt oder entfernt wird.

11. Verfahren nach Anspruch 10, **dadurch gekennzeichnet, dass** die Anweisung zur Hinzufügung oder Entfernung der Richtlinieninformation von der Richtlinieneinheit (CRF/PDF) mit einer Antwortnachricht auf eine Pull-Anfrage (CCR) des Eingangsnetzknotens (GGSN) an diesen übermittelt wird.

12. Verfahren nach einem der Ansprüche 9 bis 11, **dadurch gekennzeichnet, dass** der Eingangsnetzknoten (GGSN) beim Empfang einer Verbindungsanfrage für eine auf eine bestehende Verbindung (primärer PDP Context) aufgesetzte Verbindung (sekundärer PDP Context) zumindest die von dem mobilen Endgerät (UE) übermittelten Angaben über die Verteilung (TFT) speichert.

13. Verfahren nach Anspruch 12, **dadurch gekennzeichnet, dass** die Nutzerdaten (IP-Adresse) und Angaben zur Verteilung (TFT) bei einer Pull-Anfrage des Eingangsnetzknotens (GGSN) an die Richtlinieneinheit (CRF/PDF) in der Richtlinieneinheit (CRF/PDF) als Identifikationsschlüssel-Angabe für die Richtlinieninformation, die für die Verbindung (PDP Context) durchgesetzt werden soll, verwendet wird.

14. Verfahren nach einem der Ansprüche 1 bis 13, **dadurch gekennzeichnet, dass** die Richtlinieninformationen Richtlinien betreffend die Vergebührung des Datenverkehrs und/oder betreffend die Dienstgüte darstellen.

15. System zur Durchsetzung geeigneter Richtlinien für Datenverkehr in einem Funk-Kommunikationssystem, das zumindest ein mobiles Endgerät (UE) und zumindest ein Dienstenetz (IMS) mit zumindest einem Eingangsnetzknoten (GGSN) und zumindest einer Richtlinieneinheit (CRF/PDF), in der Richtlinieninformationen hinterlegt sind, umfasst, **dadurch gekennzeichnet, dass** in der Richtlinieneinheit ein Zeitschalter enthalten ist, der eine Weiterleitung von Richtlinieninformationen an den Eingangsnetzknoten (GGSN) für eine vorgegebene Zeit unterbrechen kann.

16. System nach Anspruch 15, **dadurch gekennzeichnet, dass** in der Richtlinieneinheit (CRF/PDF) eine Filtereinheit vorgesehen ist, die einen Eingang für Nutzerdaten und einen Eingang für Angaben zur Verteilung (TFT) von Uplink- und/oder Downlink-Verkehr auf bestehende Verbindungen (PDP Context) aufweist, und die über diese Eingänge erhaltenen Angaben als Filterkriterium verwendet werden.

17. System nach Anspruch 16, **dadurch gekennzeichnet, dass** der Eingangsnetzknoten (GGSN) mit mindestens einer Richtlinieneinheit (CRF/PDF) zur Übermittlung von Angaben zur Verteilung (TFT) von Uplink- und/oder Downlink-Verkehr auf bestehende Verbindungen (PDP Context) in Zusammenhang mit Nutzerdaten (IP) betreffend das mobile Endgerät (UE) verbunden ist.

18. System nach einem der Ansprüche 15 bis 17, **dadurch gekennzeichnet, dass** dieses Mittel zur Ausführung aller Schritte eines Verfahrens nach einem oder mehreren der Ansprüche 1 bis 14 aufweist.

## Claims

1. Method of enforcing appropriate policies for data traffic in a radiocommunications system which comprises at least one mobile terminal device (UE) and at least one service network (IMS) with at least one input network node (GGSN) and at least one policy unit (CRF/PDF) in which policy information is stored, **characterised in that** the transmission of policy information relating to a connection (primary PDP context) to the input node (GGSN) is interrupted for a predetermined time.

2. Method according to claim 1, **characterised in that** the transmission of policy information is interrupted at the moment when the policy unit (CRF/PDF) receives a report of the successful establishment of an application session with a mobile terminal device (UE) from an application element (AF).

3. Method according to claim 1 or 2, **characterised in that** the predetermined time is zero and the policy information is implemented immediately and removed on receipt of information relating to the distribution of data traffic (TFT) and applied to another connection (PDP context).

4. Method according to one of claims 1 to 3, **characterised in that** the policy unit (CRF/PDF) stores policy information which has been transmitted from the policy unit (CRF/PDF) to the input network node (GGSN).

5. Method according to one of claims 1 to 4, **characterised in that** on receiving a request for the establishment of an additional connection (secondary PDP context) on top of an existing connection (primary PDP context) before the predetermined time elapses, the interruption of the transmission of the policy information to the input network node (GGSN) is stopped and the policy information requested is sent.

6. Method according to one of claims 1 to 5, **characterised in that** on receiving a request for the establishment of an additional connection (secondary PDP context) after the transmission of policy information relating to a first connection (primary PDP context) the policy information transmitted is removed and applied to the additional connection (secondary PDP context).

7. Method according to one of claims 5 or 6, **characterised in that** requested policy information is obtained through a TFT uplink/downlink filter.

8. Method according to one of claims 1 to 7, **characterised in that** on establishing the policy information to be applied to a connection (PDP context) with a mobile terminal device (UE) at least some user data (IP) relating to the mobile terminal device (UE) is used as a connecting parameter between a connection (PDP context) used by the mobile terminal device (UE) and sessions or events at the application level.

9. Method according to claim 8, **characterised in that** on establishing an additional connection (secondary PDP context) on top of an existing connection (primary PDP context) with the mobile terminal device (UE) data relating to the distribution of uplink and/or downlink traffic over a number of existing connections (TFT) is used as an additional connecting parameter.

10. Method according to claim 9, **characterised in that** depending on filter information regarding the data relating to the distribution (TFT) appropriate policy information for at least one application session in a connection (PDP context) is added or removed.

11. Method according to claim 10, **characterised in that** the instruction to add or remove the policy information from the policy unit (CRF/PDF) with a reply message to a pull enquiry (CCR) from the input network node (GGSN) is sent to the latter.

12. Method according to one of claims 9 to 11, **characterised in that** the input network node (GGSN) on receiving a connection request for a connection (secondary PDP context) on top of an existing connection (primary PDP context) stores at least the data relating to distribution (TFT) sent from the mobile terminal device (UE).

13. Method according to claim 12, **characterised in that** the user data (IP address) and information on distribution (TFT) in the case of a pull enquiry from the input network node (GGSN) to the policy unit (CRF/PDF) is used in the policy unit (CRF/PDF) as identification code data for the policy information which is to be implemented for the connection (PDP context).

14. Method according to one of claims 1 to 13, **characterised in that** the policy information constitutes policies relating to the billing of data traffic and/or relating to the quality of service.

15. System for enforcing appropriate policies for data traffic in a radiocommunications system which comprises at least one mobile terminal device (UE) and at least one service network (IMS) with at least one input network node (GGSN) and at least one policy unit (CRF/PDF) in which policy information is stored, **characterised in that** in the policy unit there is a time switch that can interrupt the transmission of policy information to the input node (GGSN) for a predetermined time.

16. System according to claim 15, **characterised in that** in the policy unit (CRF/PDF) is provided a filter unit which comprises an input for user data and an input for data relating to the distribution (TFT) of uplink and/or downlink traffic to existing connections (PDP context), and the data received through these inputs is used as a filter criterion.

17. System according to claim 16, **characterised in that** the input network node (GGSN) is connected to at least one policy unit (CRF/PDF) for transmitting data on the distribution (TFT) of uplink and/or downlink traffic to existing connections (PDP context), in conjunction with user data (IP) relating to the mobile terminal device (UE).

18. System according to one of claims 15 to 17, **characterised in that** it comprises means for carrying out all the steps of a method according to one or more of claims 1 to 14.

## Revendications

1. Procédé pour mettre en oeuvre des politiques appropriées pour le trafic de données dans un système de radiocommunication, qui comporte au moins un équipement terminal (UE) mobile et au moins un réseau de service (IMS) avec au moins un noeud d'entrée (GGSN) et au moins une unité de politiques (CRF/PDF), dans laquelle sont déposées des informations de politique, **caractérisé en ce qu'**une transmission des informations de politique concernant une liaison (contexte de PDP primaire) à un noeud d'entrée (GGSN) est interrompue pendant une durée prédéterminée.

2. Procédé selon la revendication 1, **caractérisé en ce que** la transmission des informations de politique est interrompue au moment auquel l'unité de politiques (CRF/PDF) a reçu un message sur l'établissement réussi d'une session d'application avec un équipement terminal mobile (UE) par un élément d'application (AF).

3. Procédé selon la revendication 1 ou 2, **caractérisé en ce que** la durée prédéterminée est nulle et que les informations de politique sont mises en oeuvre immédiatement et que, à la réception, des indications sur la distribution du trafic de données (TFT) sont supprimées et appliquées à une autre liaison (contexte de PDP).

4. Procédé selon l'une quelconque des revendications 1 à 3, **caractérisé en ce que** l'unité de politiques (CRF/PDF) stocke des informations de politique qui ont été transmises par l'unité de politiques (CRF/PDF) au noeud d'entrée (GGSN).

5. Procédé selon l'une quelconque des revendications 1 à 4, **caractérisé en ce que**, lors de la réception d'une demande pour établir une autre liaison (contexte de PDP secondaire) ajoutée à une liaison déjà existante (contexte de PDP primaire) avant l'expiration de la durée prédéterminée, l'interruption de la transmission des informations de politique au noeud d'entrée (GGSN) est arrêtée et les informations de politique demandées sont envoyées.

6. Procédé selon l'une quelconque des revendications 1 à 5, **caractérisé en ce que**, lors de la réception d'une demande pour établir une liaison supplémentaire (contexte de PDP secondaire) après la transmission des informations de politique concernant une première liaison (contexte de PDP primaire) l'information de politique transmise est supprimée et est appliquée à la liaison supplémentaire (contexte de PDP secondaire).

7. Procédé selon l'une quelconque des revendications 5 ou 6, **caractérisé en ce que** les informations de politique demandées sont déterminées par un filtre de liaison montante/descendante TFT.

8. Procédé selon l'une quelconque des revendications 1 à 7, **caractérisé en ce que**, lors de la détermination des informations de politique à appliquer pour une liaison (contexte de PDP) avec un équipement terminal (UE) mobile, au moins une partie des données utiles (IP) concernant l'équipement terminal (UE) mobile sert de paramètre de connexion entre une liaison (contexte de PDP), qui est utilisée par l'équipement terminal (UE) mobile, et des sessions ou des événements sur le niveau d'application.

9. Procédé selon la revendication 8, **caractérisé en ce que**, lors de l'établissement d'une autre liaison (contexte de PDP secondaire) ajoutée à une liaison déjà existante (contexte de PDP primaire) avec l'équipement terminal (UE) mobile, des indications sur la distribution du trafic de liaison montante et/ou de liaison descendante sont employées sur plusieurs liaisons existantes (TFT) en tant que paramètres de connexion supplémentaires.

10. Procédé selon la revendication 9, **caractérisé en ce que**, en fonction d'une information de filtre concernant les indications sur la distribution (TFT), une information de politique appropriée est ajoutée ou supprimée pour au moins une session d'application dans une liaison (contexte de PDP).

11. Procédé selon la revendication 10, **caractérisé en ce que** l'instruction pour ajouter ou supprimer l'information de politique est communiquée par l'unité de politiques (CRF/PDF) au noeud d'entrée (GGSN) avec un message de réponse à la demande (CCR) de celui-ci.

12. Procédé selon l'une quelconque des revendications 9 à 11, **caractérisé en ce que** le noeud d'entrée (GGSN), lors de la réception d'une demande de liaison pour une liaison (contexte de PDP secondaire) ajoutée à une liaison existante (contexte de PDP primaire), stocke au moins les indications sur la distribution (TFT) communiquées par l'équipement terminal (UE) mobile.

13. Procédé selon la revendication 12, **caractérisé en ce que** les données utiles (adresse IP) et les indications sur la distribution (TFT) lors d'une demande du noeud d'entrée (GGSN) à l'unité de politiques (CRF/PDF) sont employées dans l'unité de politiques (CRF/PDF) en tant qu'indication de clé d'identification pour l'information de politique qui doit être mise en oeuvre pour la liaison (contexte de PDP).

14. Procédé selon l'une quelconque des revendications 1 à 13, **caractérisé en ce que** les informations de politique représentent des politiques concernant la taxation du trafic de données et/ou concernant la qualité de service.

15. Système pour mettre en oeuvre des politiques appropriées pour le trafic de données dans un système de radiocommunication, qui comporte au moins un équipement terminal (UE) mobile et au moins un réseau de service (IMS) avec au moins un noeud d'entrée (GGSN) et au moins une unité de politiques (CRF/PDF), dans laquelle sont déposées des informations de politique, **caractérisé en ce que** l'unité de politiques contient un commutateur temporel qui peut interrompre une transmission d'informations de politique au noeud d'entrée (GGSN) pendant une durée prédéterminée.

16. Système selon la revendication 15, **caractérisé en ce que**, dans l'unité de politiques (CRF/PDF), il est prévu une unité de filtrage qui comporte une entrée pour des données d'utilisateur et une entrée pour des indications sur la distribution (TFT) du trafic de liaison montante et/ou de liaison descendante sur des liaisons existantes (contexte de PDP), et **en ce que** les indications reçues par le biais de ces entrées servent de critère de filtrage.

17. Système selon la revendication 16, **caractérisé en ce que** le noeud d'entrée (GGSN) est relié à au moins une unité de politiques (CRF/PDF) pour communiquer des indications sur la distribution (TFT) du trafic de liaison montante et/ou de liaison descendante sur des liaisons existantes (contexte de PDP) en relation avec des données d'utilisateur (IP) concernant l'équipement terminal (UE) mobile.

18. Système selon l'une quelconque des revendications 15 à 17, **caractérisé en ce que** celui-ci comporte des moyens pour exécuter toutes les étapes d'un procédé selon une ou plusieurs des revendications 1 à 14.
